(19) **Europäisches Patentamt European Patent Office Office européen des brevets**

(11) **EP 4 479 588 B1**

(12) **EUROPEAN PATENT SPECIFICATION**

(45) Date of publication and mention
of the grant of the patent:
**12.11.2025 Bulletin 2025/46**

(21) Application number: **23706053.8**

(22) Date of filing: **03.02.2023**

(51) International Patent Classification (IPC):
***D21G 1/00*** *(2006.01)* ***D21G 9/00*** *(2006.01)*
***G01L 5/00*** *(2006.01)*

(52) Cooperative Patent Classification (CPC):
**D21G 1/0026; D21G 1/004; D21G 1/008;
D21G 9/0045; G01L 5/0085**

(86) International application number:
**PCT/FI2023/050068**

(87) International publication number:
**WO 2023/156705 (24.08.2023 Gazette 2023/34)**

(54) **A SENSOR DEVICE FOR DETECTING DEFORMATION OF NIP ROLLS**

SENSORVORRICHTUNG ZUR DETEKTION DER VERFORMUNG VON ANDRUCKWALZEN

DISPOSITIF DE DÉTECTION PERMETTANT DE DÉTECTER UNE DÉFORMATION DE ROULEAUX À CONTACT LINÉAIRE

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **16.02.2022 FI 20225140**

(43) Date of publication of application:
**25.12.2024 Bulletin 2024/52**

(73) Proprietor: **Etteplan Oyj
02150 Espoo (FI)**

(72) Inventor: **PÖLLÄNEN, Ilkka
45360 Valkeala (FI)**

(74) Representative: **Boco IP Oy Ab
Kansakoulukatu 3
00100 Helsinki (FI)**

(56) References cited:
**EP-A1- 2 620 545 US-A1- 2010 319 868
US-A1- 2018 003 227**

## Description

### Field

The present invention relates to a sensor device and a method related to detecting deformation of at least one nip roll. More particularly, the invention relates to a tension-ring based sensor device for analyzing movement caused by deformation of at least one nip roll of a paper or board machine.

### Background

In field of paper- and board (cardboard) machines, a nip refers to a gap between two rolls. Surfaces of the rolls are forced together, typically by pressing them towards each other by hydraulic cylinders. The nip applies a pressing force towards a felt and/or a wire and/or the material web passing through the rolling nip. Typically, as known in the art, a paper or board machine has three to four nips for various purposes.

Nip rolls (also referred to as nip rollers) of paper or board machines typically have a radially resilient polymer coating with thickness in approximate range between 10 to 15 mm. Over time, the polymer coating deforms due to the pressure and rotation. A typical deformation of the polymer coating causes the roll to have a cross-section shape that resembles a flower-shaped gingerbread cookie; a relatively regularly repeating pattern of radially alternating thicker and thinner coating zones, which form shallow peaks and valleys. Such patterned deformation causes vibration of the nip rolls that causes fluctuation in the force at the nip, which reduces quality of the end-product traveling through the nip. The roll(s) or the coating thereof needs to be fixed or even replaced to achieve the wanted quality of the end-product.

Oscillation of nip rolls due to deformation of the polymer coating thereof is self-induced and has been widely studied. A recognized problem in studying this phenomenon is how to reliably measure it and how to characterize such deformation.

### Description of the related art

EP patent application EP2620545 discloses an arrangement for indirect force measurement in a manufacturing machine, where deformation of frame parts or corresponding support structures is measured with at least two strain gages attached to the frame parts or support structures.

Patent EP1392918 discloses using an optical distance sensor means for registering actual value of the axial spacing of two rolls together with pressing force transmitted between the two rolls to achieve a substantially constant line pressure between these two rolls.

Utility model RU137606U1 discloses an apparatus for measuring deformations of working surfaces of nip rolls using magnetoelastic material grasping shafts of the rolls over the entire length of the shaft element.

Patent application US 2010/0319868 discloses a sensor device for detecting pressure for deriving deformation of a surface in a nip between two rolls.

Patent application US 2018/0003227 discloses a roller with integrated load cell in a hollow bore of the roller.

### Summary

An object is to provide a method and apparatus so as to solve the problem of reliably measuring deformation of nip rolls to enable studying dynamic behaviour of the rolls. The objects of the present invention are achieved with a sensor device according to the claim 1. The objects of the present invention are further achieved with a method according to the claim 7.

The preferred embodiments of the invention are disclosed in the dependent claims.

According to a first aspect, a sensor device for detecting deformation of a surface of at least one of two rolls which form a nip between said two rolls is provided. The sensor device comprises a frame part comprising a tension half-ring attached at its ends between two straight portions formed by elongated, rigid and flat sheets disposed on a plane. The tension half-ring extends from the plane at one side thereof. The tension half-ring and the two straight portions are arranged along a longitudinal central axis of the frame part. The sensor device comprises four strain gages attached pairwise on outer and inner surfaces of the tension half-ring and coupled into a Wheatstone bridge configuration. The sensor device is configured to be attached to supporting frames of the two rolls such that the longitudinal central axis of the frame part is parallel with a straight line traveling via central rotation axes of the two rolls and the nip therebetween.

According to a second aspect, the pair of strain gages in said pairwise arrangement are placed parallel to each other and symmetrically on different sides of the longitudinal central axis of the frame part.

According to a third aspect, outer ends of the straight portions are provided with holes for attaching one end of the frame part to a supporting frame of a first roll of the two rolls and for attaching the other end of the frame part to a supporting frame of a second roll of the two rolls.

According to a fourth aspect, the frame part of the sensor device is made of metal, such as steel, aluminum or bronze.

According to another aspect, a use of a sensor device according to any one of the above aspects is provided for detecting deformation of a surface of at least one of two rolls of a paper or board machine.

According to another aspect, the deformation detected by using the sensor device is caused by deformation of a resilient polymer coating of the surface of at least one of the rolls.

According to a first method aspect, a method of detecting deformation of a surface of at least one of two rolls which form a nip between said two rolls is provided. Said deformation is detected by a sensor device according to any one of the above first to fourth aspects. The method comprises attaching each end of the sensor device to a supporting frame of different one of the two rolls such, that the longitudinal central axis of the frame part of the sensor device is parallel with a straight line traveling via central rotation axes of the two rolls and the nip therebetween, obtaining an output signal from the sensor device during normal operation of said two rolls, and detecting said deformation of the surface of at least one of said two rolls based on dynamic behaviour of said two rolls based on the output signal.

According to a second method aspect, said detecting said deformation comprises performing a Fast Fourier Transform (FFT) to the output signal, and determining periodicity of said deformation based on frequency contents of the FFT-transformed output signal.

According to a third method aspect, said periodicity is determined by dividing a detected peak oscillation frequency with the rotation frequency of the respective roll.

According to a fourth method aspect, said detecting said deformation comprises obtaining an output voltage of the sensor device or a ratio between an output voltage and an input voltage of the sensor device, and determining magnitude of mutual displacement of the two rollers based on said output voltage or said ratio.

The present invention is based on the idea of placing a displacement-measuring sensor device on a straight line that traverses parallel to a straight line that travels via rotation axes of the two rolls and the nip between them to measure variation of axial distance between the two rollers, without actually imposing a need for measuring the axial distance as such. The sensor device is fixed to frames or other non-rotating support structures of the two rolls, and it is attached between the rotation axes of the two rolls, but it does not need to extend to the rotation axes. Operation of the sensor device is based on measuring deformation of a weakly bent beam type tension half-ring equipped with Wheatstone bridge strain gages, also referred to as strain gauges.

The present invention has the advantage that it gives accurate and reliable measurement results on deformation of working surfaces of the rollers, and the device and the method are particularly well suitable for determining periodicity of deformations of the roll's surface that cause unwanted oscillation. The sensor device is simple, easy to manufacture and cheap. It does not affect operation of the measured apparatus.

**Brief description of the drawings**

In the following the invention will be described in greater detail, in connection with preferred embodiments, with reference to the attached drawings, in which

Figures 1A and 1B illustrate structure of a frame of the sensor device.
Figures 2A and 2B illustrate a sensor device with strain gages.
Figures 3A to 3C illustrate bridge coupling of strain gages.
Figure 4 illustrates sensor device installed on a nip.
Figure 5 illustrates output signal from the sensor device in time domain.
Figure 6 illustrates output signal of the sensor device in frequency domain.

**Detailed description**

In the context of this application, terms roll and nip roll are used interchangeably, both referring to industrial rolls that are intended to be arranged axially in parallel and pressed together to form a nip therebetween.

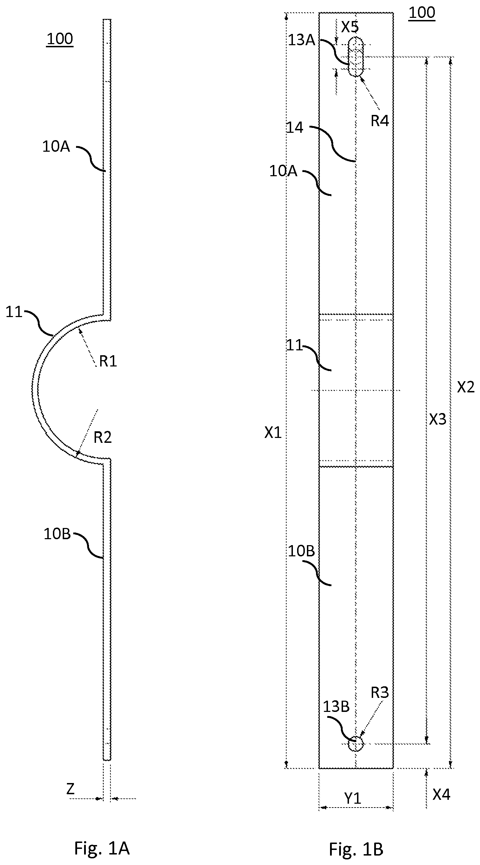

The figure 1A shows a side view of an exemplary embodiment of the frame part (100) of the sensor device. The figure 1B shows a top view of the preferred embodiment of the frame part (100) of the sensor device.

The frame part (100) comprises two straight portions, (10A, 10B), which are preferably flat and rigid, and a tension half-ring (11) attached between the two straight portions. The frame part (100) is preferably made of metal, such as steel, aluminum or bronze. The tension half-ring (11) forms a half circle approximately at the middle of the frame part (100). The straight portions (10A, 10B) are preferably arranged mutually on the same plane, and the tension half-ring (11) extends from this plane at one side thereof. Each straight portion (10A, 10B) is preferably provided with at least one hole (13A, 13B) for fixing the frame part at each end thereof to a frame of one of the two rolls by coupling means such as screws or bolts.

However, holes are not necessary, but any other suitable means for fixing the frame into a structure that is to be measured by the sensor device can be used, such as welding or strong magnets, such as neodymium magnets. Gluing is less suitable, because of vibrations. As can be seen from the figure 1B, projection of the frame part (100) on the plane of the two straight portions (10A, 10B) is preferably symmetrical with respect to the longitudinal central axis (14) of the frame part (100). Width of the tension half-ring (11) is preferably equal to the width (Y1) of the straight portions (10A, 10B), and thickness of the tension half-ring (11) is preferably approximately same as thickness of the straight portions (10A, 10B).

Material of the frame part is metal, preferably steel. For example, structural steel such as S355 grade steel is used in the frame, but alternative materials such as alloy steel, stainless steel or acid-resisting steel can be used. Also, aluminum and bronze are suitable materials for the frame part. For ensuring that temperature changes do not cause false measurement results, it is important that temperature of the frame part and the entire sensor device should be allowed to settle before installation so that temperature thereof is similar to the ambient temperature, and that temperature does not significantly change during measurements.

The frame part (100) can be manufactured for example by first cutting a ring with wanted width from a circular pipe and cutting this ring into two halves to obtain a half circle to be used as the tension half-ring (11). Straight portions (10A, 10B) may be cut to wanted size out of a flat steel sheet and welded to the ends of the tension half-ring (11). Any alternative manufacturing method of the frame part (100) is applicable as long as straight portions (10A, 10B) are attached to the tension half-ring (11) so that the measured displacement motion is directly coupled to the tension half-ring (11) at its ends. For example, the entire frame part (100) can be manufactured from a single piece of metal by bending it to the wanted form, or the frame part can be casted in a mould.

According to a non-limiting exemplary embodiment used in testing, and shown in the figures 1A and 1B, thickness (Z) of the metal sheet forming the frame part (100) is 3 mm, width (Y1) of the frame part (100) is 30 mm and length (X1) of the frame part (100) is approximately 300 mm, for example 308 mm. In this example, distance (X3) between the holes (13A, 13B) along the longitudinal axis of the frame part (100) is approximately 280 mm, and one of the holes (13A) is elongated along the longitudinal dimension of the frame part to facilitate adjustable assembling of the sensor to rolls. In this example, radius of the holes (13A, 13B) is 3 mm, and distance (X5) is 10 mm. Preferably, for manufacturing sensors suitable for different sizes of rolls, total length (X1) of the frame part (100) is preferably changed, while the tension half-ring (11) portion remains the same.

In this non-limiting embodiment, internal radius (R1) of the tension half-ring (11) is 28.6 mm and external radius (R2) of the tension half-ring is 31 mm. Dimensions of the non-limiting exemplary sensor device are designed for particular set of paper machine nip rolls. Instead of these exemplary dimensions, any suitable dimensions can be applied depending on dimensions and characteristics of the measured apparatus.

Radius of the tension half-ring (11) should be constant. The tension half-ring should also be large enough to enable accommodating sufficiently sensitive strain gages therein and sufficiently small to ensure that the bridge coupled strain gages provide an output signal, i.e. an output voltage, that can be measured with the selected/available measurement device. On the other hand radius of the tension half-ring is limited by maximum distance between applicable coupling points to the nip rolls it is intended to be used for measuring as well as by space available for the tension half-ring (11) when installed in place. As understood by the skilled person, sizes of nip rolls vary and dimensions of the frame part of the sensor device needs to be selected accordingly. Above-given dimensions of the exemplary frame part were found suitable for the particular size of nip rolls used for testing.

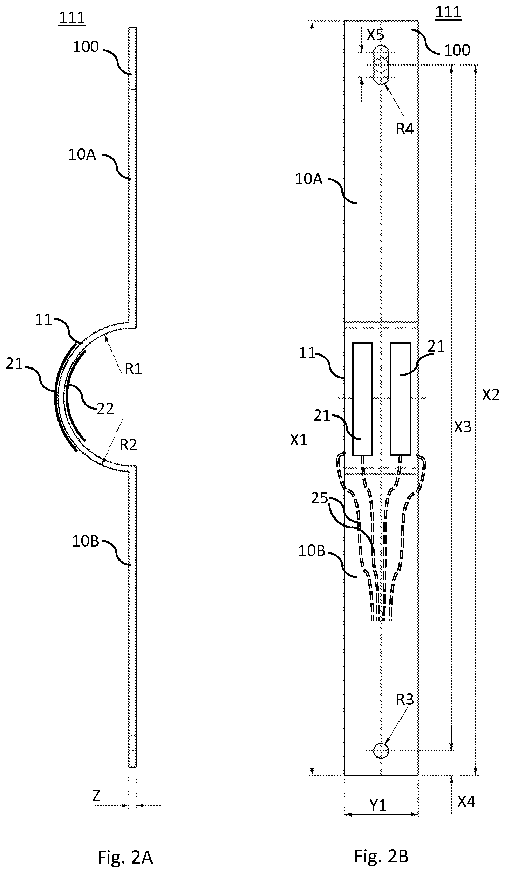

The figure 2A illustrates schematically side view of a preferred embodiment of the sensor device (111). The figure 2B illustrates schematically top view of the preferred embodiment of the sensor device (111).

To form the sensor device, four strain gages (21, 22) are attached to the tension half-ring (11) of the frame part (100). For obtaining electrical output signal from the sensor, these strain gages (21, 22) are bridge coupled and connected to a voltage source and a voltmeter by wiring (25). Tension on the tension half-ring (11) changes the shape thereof, causing resistance of the strain gages (21, 22) to vary, which is electrically measured.

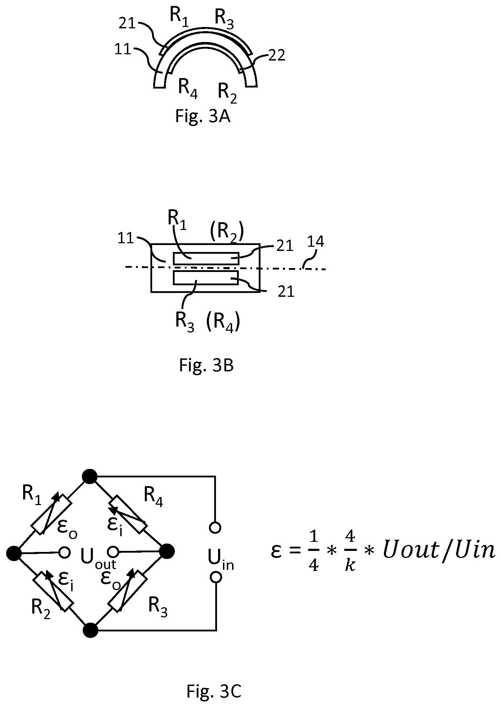

Arrangement and electrical coupling of the strain gages (21, 22) is illustrated in the figures 3A to 3C. The figure 3A illustrates a side view of the tension half-ring (11) with strain gages (21, 22) and the figure 3B illustrates a top view of the same assembly. Straight portions are not shown in the figures 3A and 3B.

Strain gages (21, 22) are preferably arranged pairwise, two strain gages (21), here referred to as resistors $R_1$, $R_3$, in parallel on the outer surface of the tension half-ring (11) and two strain gages (22), referred herein as resistors $R_2$, $R_4$, in parallel on the inner surface of the tension half-ring (11). Projection of the longitudinal axes of the strain gages (21, 22) on the plane of the straight portions is preferably aligned with the longitudinal axis (14) of the frame part (100).

Figure 3C shows the well-known principle of Wheatstone bridge coupling applied to the strain gages. In input voltage $U_{in}$ is fed to the bridge circuitry comprising four strain gages, and an output voltage $U_{out}$ is measured. Relation between the output and input voltages is directly proportional to the tension of the tension half-ring (11).

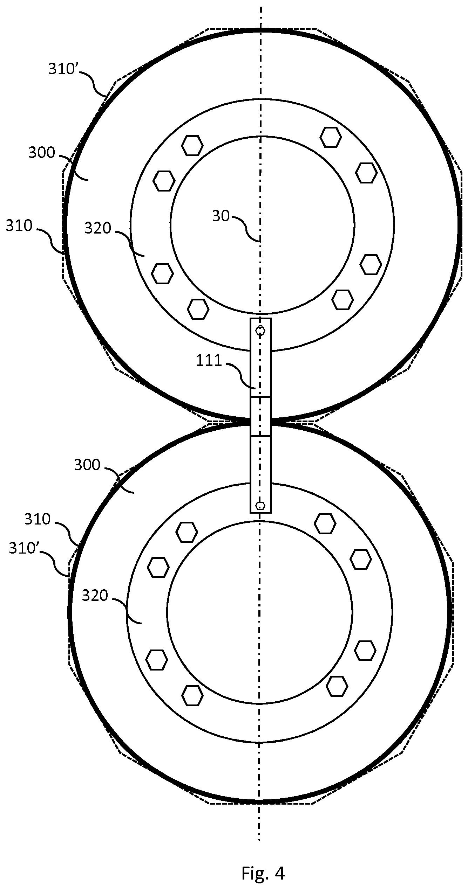

The figure 4 illustrates a sensor device installed in use position, in which it is useable to measure dynamic behaviour of nip rolls (300), each having a thin polymer coating (310) on their outer surface. Over time, the polymer coating (310) is deformed, which is illustrated by dotted lines (310'). This drawing is not in scale: deformation is greatly exaggerated - it is typically in mm-range and thus not easily visually detectable from the rolls having typically a diameter in range of tens of centimeters. Typically, the deformation follows a repeating pattern: an integer number of shallow "peaks" and "valleys" are formed in the coating, which induces an oscillation frequency in a rotating roll (300) that is a multiple of the rotation rate of the roll (300).

The sensor device (111) is attached to a supporting frame (320) of the nip rolls (300), first end of the sensor device (111) attached on supporting frame of the first nip roll and the second end of the sensor device (111) attached on the supporting frame of the second nip roll. The sensor device should be attached to the supporting frame so that its longitudinal axis is parallel to a straight line (30) traveling via central rotation axis of both nip rolls (300) and via the nip in between the rolls. Correct placement of the sensor device (111) is important to ensure that main signal components received from the measurements are caused only by distance between the rotation axes, which is caused by deformation of the surfaces of the rolls when they are rotated.

In the exemplary embodiment used for testing the measuring device principle, mid-radius of the tension half-ring is r:=29.81 mm, ring thickness is h:=2.385 mm and ring width is b:=30 mm. This gives a cross-section area of the tension half-ring is A:=h*b = 71.55 mm². Modulus of elasticity of the tension half-ring is E:=210000MPa. In the following, exemplary measurement results are given for a situation in which displacement of the rolls $\Delta_{hr}$ : = 0.05 mm.

The tension half-ring can be characterized as a weakly bent beam. As known in the art, area moment of inertia $I_1$ of a weakly bent beam is given by equation:

$$I_1 := \int_{-\frac{h}{2}}^{\frac{h}{2}} \frac{y^2}{1 + \frac{y}{r}} \cdot b \, dy = 33.95 \cdot mm^4$$

Spring constant $k_1$ for a 180° circular arc, which in this example is the tension half-ring is:

$$k_1 := \frac{1}{2} \cdot \left[ \frac{r^3}{E \cdot I_1} \cdot \left( \frac{\pi}{4} - \frac{2}{\pi} \right) \right]^{-1} = 904.45 \cdot \frac{N}{mm}$$

Bending moment M in the tension half-ring is:

$$M := \frac{1}{2} \cdot k_1 \cdot \Delta_{hr} \cdot r \cdot \left[ 1 - \frac{2}{\pi \cdot \left( 1 + \frac{I_1}{A \cdot r^2} \right)} \right] = 0.245 \cdot N \cdot m$$

and radial force P in the tension half-ring is:

$$P := k_1 * \Delta_{hr} = 45.22 \text{ N}$$

Stress on the inner surface of the tension half-ring is:

$$\sigma_{inn} := \frac{0.5 \cdot P}{A} + \frac{M}{r \cdot A} - \frac{M}{I_1} \cdot \frac{\frac{h}{2}}{1 - \frac{\frac{h}{2}}{r}} = -8.5 \cdot MPa$$

and stress on the outer surface of the tension half-ring is:

$$\sigma_{out} := \frac{0.5 \cdot P}{A} + \frac{M}{r \cdot A} + \frac{M}{I_1} \cdot \frac{\frac{h}{2}}{1 - \frac{\frac{h}{2}}{r}} = 9.4 \cdot MPa$$

Strain on the inside surface of the tension half-ring is:

$$\varepsilon_i := \frac{\sigma_{inn}}{E} = -0.0000406649$$

and strain on the outside surface of the tension half-ring is:

$$\varepsilon_o := \frac{\sigma_{out}}{E} = 0.0000447693$$

With strain gages with a gage factor $K := 2.0$ and an excitation voltage (input voltage) $U_{in} := 2.5V$, output voltage $U_{out}$ of the bridge is

$$U_{out} := \frac{k}{4} \cdot \left( \varepsilon_o - \varepsilon_i + \varepsilon_o - \varepsilon_i \right) \cdot U_{in} = 0.21359 \cdot mV$$

In this equation, opposite signs used for $\varepsilon_o$ and $\varepsilon_i$ refer to opposite directions of strains measured on the in- and outside of the tension half-ring. The input voltage $U_{in}$ depends at least on the used strain gages. Any suitable known measurement device can be used for obtaining and analyzing the output signal received from the bridge, and the output signal may be an analog or a digital value.

Sensitivity of the sensor device can be determined by calculating a sensitivity ratio $U_{out}/U_{in}$ between the excitation voltage and output voltage:

$$\frac{U_{out}}{U_{in}} = 0.0000854342 \qquad \frac{mV}{V}$$

This sensitivity ratio $U_{out}/U_{in}$ can be used as basic data when designing dimensions of the sensor device for obtaining sufficiently accurate strain measurements, and to determine required capabilities (sensitivity, accuracy etc.) of the measurement device used to obtain measurement results from the output signal with wanted accuracy.

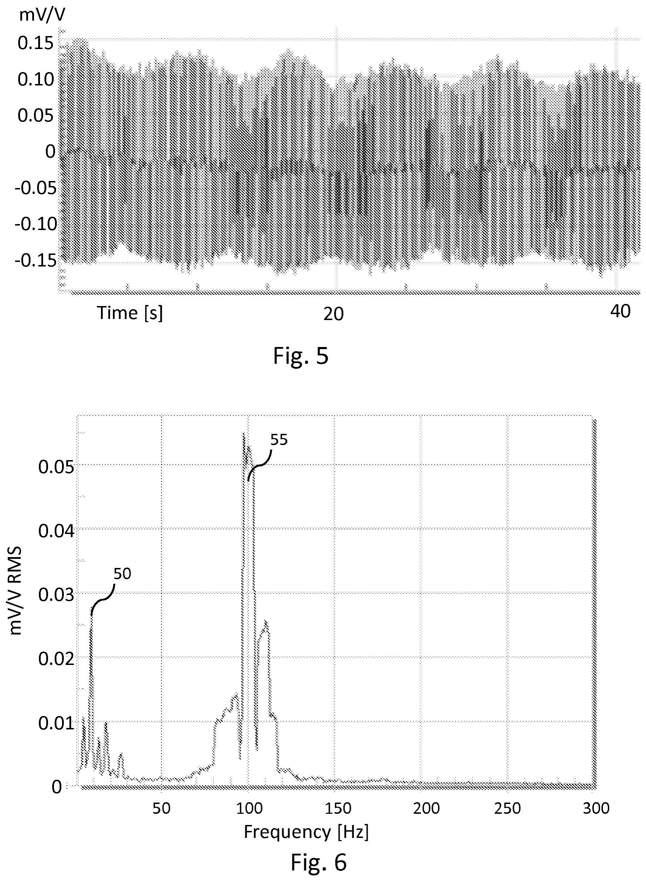

The figure 5 illustrates an output signal $U_{out}/U_{in}$ from the tested sensor device as a function of time, measured from nip rolls of a paper machine in operation. When the input voltage $U_{in}$ is constant, the output voltage $U_{out}$ can be used as the output signal. Based on tests, the quality of the output signal obtained with the sensor device is high. The output signal in this example demonstrates clear periodicity. This periodicity can be transformed into roll displacement x by means of a simple, linear formula, such as $x = a*U_{out}/U_{in} + b$ or $x = a*U_{out} + b$, where constants a and b can be defined using linear regression.

The figure 6 illustrates an example of a processed output signal. In this case, the output signal is provided as a ratio $U_{out}/U_{in}$, which has been subjected to Fast Fourier transform (FFT) to obtain a view of contents of the output signal in frequency domain. Instead of using the ratio $U_{out}/U_{in}$, FFT can be performed on the output voltage $U_{out}$. Rotation frequency (50) of the roll in this example is 5 Hz, which appears as a peak in the frequency curve, and greatest magnitude of oscillation (55) appears at frequency of 100 Hz. This measurement result indicates that the roll under investigation is deformed such that it has a regular deformation pattern that has 100 Hz / 5 Hz = 20 shallow peaks and valleys. This information is important for enabling finding a solution to the oscillation problem, which is not in the scope herein. With the invented sensor device measurements can be made during normal operation of the paper or board machine, thus avoiding need to interrupt normal operation for measurement purposes. Applicability the invention is not limited to nip rolls of paper and/or board machines only, but the sensor device can be used to measure any type of industrial roll pair that forms a nip and may suffer from similar type of relatively small deformations of the outer surface(s) of the roll(s). Use of the invented sensor device avoids need for having expensive special rolls with built-in measurement capabilities.

It is apparent to a person skilled in the art that as technology advanced, the basic idea of the invention can be implemented in various ways. The invention and its embodiments are therefore not restricted to the above examples, but they may vary within the scope of the claims.

## Claims

1. A sensor device (111) for detecting deformation of a surface of at least one of two rolls (300) which form a nip between said two rolls (300), the sensor device (111) comprising:

   - a frame part (100) comprising two straight portions (10A, 10B) formed by elongated, rigid and flat sheets disposed on a plane, wherein the two straight portions (10A, 10B) are arranged along a longitudinal central axis (14) of the frame part (100), and

   **characterized in that**

   the frame part (100) comprises a tension half-ring (11) attached at its ends between the two straight portions (10A, 10B), the tension half-ring (11) extending from the plane at one side of the plane, wherein the tension half-ring (11) is arranged along the longitudinal central axis (14) of the frame part (100),
   **in that** the sensor device comprises four strain gages (21, 22) attached pairwise on outer and inner surfaces of the tension half-ring (11) and coupled into a Wheatstone bridge configuration, and
   **in that** the sensor device (111) is configured to be attached to supporting frames (320) of the two rolls (300) such that the longitudinal central axis (14) of the frame part (100) is parallel with a straight line (30) traveling via central rotation axes of the two rolls (300) and the nip therebetween.

2. The sensor device (111) according to claim 1, wherein the pair of strain gages (21; 22) in said pairwise arrangement are placed parallel to each other and symmetrically on different sides of the longitudinal central axis (14) of the frame part (100).

3. The sensor device (111) according to claim 1 or 2, wherein outer ends of the straight portions (10A, 10B) are provided with holes (13A, 13B) for attaching one end of the frame part (100) to a supporting frame (320) of a first roll of the two rolls (300) and for attaching the other end of the frame part (100) to a supporting frame (320) of a second roll of the two rolls.

4. The sensor device (111) according to any of claims 1 to 3, wherein the frame part of the sensor device (111) is made of metal, such as steel, aluminum or bronze.

5. Use of a sensor device (111) according to any one of claims 1 to 4 for detecting deformation of a surface of at least one of two rolls (300) of a paper or board machine.

6. The use according to claim 5, wherein deformation is caused by deformation (310') of a resilient polymer coating (310) of the surface of at least one of the rolls (300).

7. A method of detecting deformation of a surface of at least one of two rolls (300) which form a nip between said two rolls (300), wherein said deformation is detected by a sensor device (111) according to any one of claims 1 to 4, the method comprising:

   - attaching each end of the sensor device (111) to a supporting frame (320) of different one of the two rolls (300) such, that the longitudinal central axis (14) of the frame part (100) of the sensor device (111) is parallel with a straight line (30) traveling via central rotation axes of the two rolls (300) and the nip therebetween;
   - obtaining an output signal from the sensor device (111) during normal operation of said two rolls (300); and
   - detecting said deformation of the surface of at least one of said two rolls (300) based on dynamic behaviour of said two rolls (300) based on the output signal.

8. The method according to claim 7, wherein said detecting said deformation comprises:

- performing a Fast Fourier Transform (FFT) to the output signal; and
- determining periodicity of said deformation based on frequency contents of the FFT-transformed output signal.

9. The method according to claim 8, wherein said periodicity is determined by dividing a detected peak oscillation frequency (55) with the rotation frequency (50) of the respective roll (300).

10. The method according to any one of claims 7 to 9, wherein said detecting said deformation comprises:

- obtaining an output voltage ($U_{out}$) of the sensor device (111) or a ratio between an output voltage ($U_{out}$) and an input voltage ($U_{in}$) of the sensor device (111); and
- determining magnitude of mutual displacement of the two rolls (300) based on said output voltage or said ratio.

**Patentansprüche**

1. Sensorvorrichtung (111) zur Erkennung einer Verformung einer Oberfläche von mindestens einer von zwei Walzen (300), die einen Walzenspalt zwischen den beiden Walzen (300) ausbilden, wobei die Sensorvorrichtung (111) umfasst:

- einen Rahmenteil (100), der zwei gerade Teilabschnitte (10A, 10B) umfasst, die durch auf einer Ebene angeordnete längliche, starre und flache Bleche ausgebildet sind, wobei die beiden geraden Teilabschnitte (10A, 10B) entlang einer zentralen Längsachse (14) des Rahmenteils (100) angeordnet sind, und

**gekennzeichnet dadurch, dass**

der Rahmenteil (100) einen Halbspannring (11) umfasst, der an seinen Enden zwischen den beiden geraden Teilabschnitten (10A, 10B) angebracht ist, wobei der Halbspannring (11) an einer Seite der Ebene aus der Ebene herausragt, wobei der Halbspannring (11) entlang der zentralen Längsachse (14) des Rahmenteils (100) angeordnet ist,
**dadurch, dass** die Sensorvorrichtung vier Dehnungsmessstreifen (21, 22) umfasst, die paarweise an der Außen- und Innenfläche des Halbspannrings (11) angeordnet und zu einer Wheatstonebrückenkonfiguration gekoppelt sind, und
**dadurch, dass** die Sensorvorrichtung (111) dafür ausgelegt ist, an Stützrahmen (320) der beiden Walzen (300) so angebracht zu werden, dass die zentrale Längsachse (14) des Rahmenteils (100) parallel zu einer Geraden (30) ist, die über zentrale Drehachsen der beiden Walzen (300) und dem dazwischenliegenden Walzenspalt verläuft.

2. Sensorvorrichtung (111) nach Anspruch 1, wobei die beiden Dehnungsmessstreifen (21; 22) in der paarweisen Anordnung parallel zueinander und symmetrisch auf unterschiedlichen Seiten der zentralen Längsachse (14) des Rahmenteils (100) platziert sind.

3. Sensorvorrichtung (111) nach Anspruch 1 oder 2, wobei äußere Enden der geraden Teilabschnitte (10A, 10B) mit Löchern (13A, 13B) versehen sind, um ein Ende des Rahmenteils (100) an einem Stützrahmen (320) einer ersten Walze der beiden Walzen (300) anzubringen und um das andere Ende des Rahmenteils (100) an einem Stützrahmen (320) einer zweiten Walze der beiden Walze anzubringen.

4. Sensorvorrichtung (111) nach einem der Ansprüche 1 bis 3, wobei der Rahmenteil der Sensorvorrichtung (111) aus Metall, wie Stahl, Aluminium oder Bronze, hergestellt ist.

5. Verwendung einer Sensorvorrichtung (111) nach einem der Ansprüche 1 bis 4 zum Erkennen einer Verformung einer Oberfläche mindestens einer von zwei Walzen (300) einer Papier- oder Kartonmaschine.

6. Verwendung nach Anspruch 5, wobei die Verformung durch eine Verformung (310') einer elastischen Polymerbeschichtung (310) der Oberfläche mindestens einer der Walzen (300) verursacht ist.

7. Verfahren zur Erkennung einer Verformung einer Oberfläche von mindestens einer von zwei Walzen (300), die einen Walzenspalt zwischen den beiden Walzen (300) ausbilden, wobei die Verformung durch eine Sensorvorrichtung (111) nach einem der Ansprüche 1 bis 4 erkannt wird, wobei das Verfahren umfasst:

- Anbringen eines jeden Endes der Sensorvorrichtung (111) an einem Stützrahmen (320) einer jeweils anderen der beiden Walzen (300), so dass die zentrale Längsachse (14) des Rahmenteils (100) der Sensorvorrichtung (111) parallel zu einer Geraden (30) ist, die über zentrale Drehachsen der beiden Walzen (300) und dem dazwischenliegenden Walzenspalt verläuft;
- Erhalten eines Ausgangssignals der Sensorvorrichtung (111) während des Normalbetriebs der beiden Walzen (300); und
- Erkennen der Verformung der Oberfläche von mindestens einer der beiden Walzen (300) auf Grundlage eines dynamischen Verhaltens der beiden Walzen (300) auf Grundlage des Ausgangssignals.

8. Verfahren nach Anspruch 7, wobei das Erkennen der Verformung umfasst:

- Ausführen einer Fast-Fourier-Transformation (FFT) am Ausgangssignal; und
- Bestimmen der Periodizität der Verformung auf Grundlage von Frequenzgehalten des FFT-transformierten Ausgangssignals.

9. Verfahren nach Anspruch 8, wobei die Periodizität dadurch bestimmt wird, dass eine erkannte maximale Schwingungsfrequenz (55) durch die Drehfrequenz (50) der jeweiligen Walze (300) dividiert wird.

10. Verfahren nach einem der Ansprüche 7 bis 9, wobei das Erkennen der Verformung umfasst:

- Ermitteln einer Ausgangsspannung ($U_{out}$) der Sensorvorrichtung (111) oder eines Verhältnisses zwischen einer Ausgangsspannung ($U_{out}$) und einer Eingangsspannung ($U_{in}$) der Sensorvorrichtung (111); und
- Bestimmen der Größe einer gegenseitigen Verschiebung der beiden Walzen (300) auf Grundlage der Ausgangsspannung oder des Verhältnisses.

**Revendications**

1. Dispositif de capteur (111) pour détecter une déformation d'une surface d'au moins l'un de deux rouleaux (300) qui forment une ligne de contact entre lesdits deux rouleaux (300), ledit dispositif de capteur (111) comprenant :

- une partie de cadre (100) comprenant deux portions droites (10A, 10B) formées par des tôles allongées, rigides et plates disposées sur un plan, lesdites deux portions droites (10A, 10B) étant agencées le long d'un axe central longitudinal (14) de la partie de cadre (100), et

**caractérisé en ce que**

la partie de cadre (100) comprend un demi-anneau de tension (11) attaché par ses extrémités entre les deux portions droites (10A, 10B), ledit demi-anneau de tension (11) dépassant du plan sur un côté du plan, ledit demi-anneau de tension (11) étant agencé le long de l'axe central longitudinal (14) de la partie de cadre (100), **en ce que** le dispositif de capteur comprend quatre jauges extensométriques (21, 22) attachées par paires sur les surfaces extérieure et intérieure du demi-anneau de tension (11) et couplées en une configuration en pont de Wheatstone, et **en ce que** le dispositif de capteur (111) est configuré pour être attaché à des cadres de support (320) des deux rouleaux (300) de telle sorte que l'axe central longitudinal (14) de la partie de cadre (100) soit parallèle à une ligne droite (30) qui passe par des axes de rotation centraux des deux rouleaux (300) et la ligne de contact entre eux.

2. Dispositif de capteur (111) selon la revendication 1, dans lequel la paire de jauges extensométriques (21; 22) dans ledit agencement par paire sont placées parallèlement l'une à l'autre et symétriquement sur des côtés différents de l'axe central longitudinal (14) de la partie de cadre (100).

3. Dispositif de capteur (111) selon la revendication 1 ou 2, dans lequel les extrémités extérieures des portions droites (10A, 10B) sont pourvues de trous (13A, 13B) pour attacher une extrémité de la partie de cadre (100) à un cadre de support (320) d'un premier rouleau des deux rouleaux (300) et pour attacher l'autre extrémité de la partie de cadre (100) à un cadre de support (320) d'un deuxième rouleau des deux rouleaux.

**4.** Dispositif de capteur (111) selon l'une des revendications 1 à 3, dans lequel la partie de cadre du dispositif de capteur (111) est faite d'un métal tel que l'acier, l'aluminium ou le bronze.

**5.** Utilisation d'un dispositif de capteur (1) selon l'une des revendications 1 à 4 pour détecter une déformation d'une surface d'au moins l'un de deux rouleaux (300) d'une machine à papier ou à carton.

**6.** Utilisation selon la revendication 5, dans lequel la déformation est causée par une déformation (310') d'un revêtement polymère élastique (310) de la surface d'au moins l'un des rouleaux (300).

**7.** Procédé pour détecter une déformation d'une surface d'au moins l'un de deux rouleaux (300) qui forment une ligne de contact entre lesdits deux rouleaux (300), dans lequel la déformation est détectée par un dispositif de capteur (111) selon l'une des revendications 1 à 4, ledit procédé comprenant les étapes consistant à :

- attacher chaque extrémité du dispositif de capteur (111) à un cadre de support (320) d'un rouleau différent des deux rouleaux (320) de telle sorte que l'axe central longitudinal (14) de la partie de cadre (100) du dispositif de capteur (111) soit parallèle à une ligne droite (30) qui passe par des axes de rotation centraux des deux rouleaux (300) et la ligne de contact entre eux;
- obtenir un signal de sortie venant du dispositif de capteur (111) pendant le fonctionnement normal des deux rouleaux (300); et
- détecter ladite déformation de la surface d'au moins l'un des deux rouleaux (300) sur la base d'un comportement dynamique des deux rouleaux (300) sur la base du signal de sortie.

**8.** Procédé selon la revendication 7, dans lequel la détection de ladite déformation comprend les étapes consistant à :

- effectuer une transformation de Fourier rapide (FFT) sur le signal de sortie; et
- déterminer la périodicité de ladite déformation sur la base de contenus de fréquence du signal de sortie transformé par FFT.

**9.** Procédé selon la revendication 8, dans lequel la périodicité est déterminée en divisant une fréquence d'oscillation maximale détectée (55) par la fréquence de rotation (50) du rouleau respectif (300).

**10.** Procédé selon l'une des revendications 7 à 9, dans lequel la détection de ladite déformation comprend les étapes consistant à :

- obtenir une tension de sortie ($U_{out}$) du dispositif de capteur (111) ou un rapport entre une tension de sortie ($U_{out}$) et une tension d'entrée ($U_{in}$) du dispositif de capteur (111); et
- déterminer l'amplitude d'un déplacement mutuel des deux rouleaux (300) sur la base de ladite tension de sortie ou dudit rapport.

Fig. 1A

Fig. 1B

Fig. 2A

Fig. 2B

Fig. 3A

Fig. 3B

Fig. 3C

$$\varepsilon = \frac{1}{4} * \frac{4}{k} * Uout/Uin$$

Fig. 4

Fig. 5

Fig. 6

**EP 4 479 588 B1**

**Patent documents cited in the description**

- EP 2620545 A
- EP 1392918 A
- RU 137606 U1
- US 20100319868 A
- US 20180003227 A